(19) **Europäisches Patentamt European Patent Office Office européen des brevets**

(11) **EP 4 749 574 A1**

(12) **EUROPEAN PATENT APPLICATION**
published in accordance with Art. 153(4) EPC

(43) Date of publication:
27.05.2026 Bulletin 2026/22

(21) Application number: 24845381.3

(22) Date of filing: 09.07.2024

(51) International Patent Classification (IPC):
$G06T\ 7/593^{(2017.01)}$ $\qquad$ $B60R\ 11/02^{(2006.01)}$
$G01B\ 11/00^{(2006.01)}$ $\qquad$ $G01C\ 3/06^{(2006.01)}$
$G06T\ 1/00^{(2006.01)}$

(52) Cooperative Patent Classification (CPC):
B60R 11/02; G01B 11/00; G01C 3/06; G06T 1/00;
G06T 7/00; G06T 7/593; G06V 10/25; G06V 20/58

(86) International application number:
PCT/JP2024/024712

(87) International publication number:
WO 2025/023000 (30.01.2025 Gazette 2025/05)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 21.07.2023 JP 2023119163

(71) Applicant: **Astemo, Ltd.**
**Chiyoda-ku,**
**Tokyo 1000004 (JP)**

(72) Inventors:
• **KIDO, Hideaki**
**Tokyo 100-8280 (JP)**
• **IRIE, Kota**
**Hitachinaka-shi, Ibaraki 312-8503 (JP)**

(74) Representative: **Strehl & Partner mbB**
**Maximilianstrasse 54**
**80538 München (DE)**

(54) **IN-VEHICLE IMAGE PROCESSING DEVICE**

(57)     Provided is an in-vehicle image processing device capable of efficiently measuring a distance to an object. Included are: an image acquisition unit B03 that acquires images from a plurality of imaging devices that capture a plurality of images having different viewpoints; a parallelizing optical axis priority determination unit B07 that determines priority for a plurality of optical axis candidates that are arbitrary optical axes on a plane orthogonal to a base line direction of the plurality of imaging devices; a parallelization processing unit B04 that performs parallelization processing on the plurality of images and outputs the images by using at least one optical axis among the optical axis candidates for which the priority has been determined; a parallax calculation unit B05 that obtains parallax on the basis of the plurality of images output from the parallelization processing unit B04; and an object detection unit B06 that detects an object (in the image) on the basis of the parallax.

EP 4 749 574 A1

[FIG. 2]

# FIG. 2

IN-VEHICLE IMAGE PROCESSING DEVICE (B00)

- CAMERA PARAMETER GROUP (B11)
- DETECTION RANGE CALCULATION UNIT (B08)
- SPATIAL RESOLUTION CALCULATION UNIT (B09)
- MEASUREMENT ACCURACY ESTIMATION UNIT (B10)
- OBJECT DETECTION UNIT (B06)
- PARALLELIZING OPTICAL AXIS PRIORITY DETERMINATION UNIT (B07)
- PARALLAX CALCULATION UNIT (B05)
- PARALLELIZATION PROCESSING UNIT (B04)
- IMAGE ACQUISITION UNIT (B03)
- IMAGING DEVICE (B01)
- IMAGING DEVICE (B02)

2

**Description**

Technical Field

The present invention relates to an in-vehicle image processing device suitable for a system that highly understands a surrounding environment in automatic driving and an advanced safety driving support system.

Background Art

In realization of automatic driving and an advanced safety driving support system, importance of a camera that monitors an outside world and detects an object necessary for host vehicle travel such as an obstacle and lane information is increasing.

In particular, in order to enhance the detection performance, a plurality of cameras are mounted on the host vehicle, information around the host vehicle is acquired, and an outside world recognition function is realized.

As a type of such a camera that recognizes the outside world, there are a monocular camera and a stereo camera using a plurality of cameras. The stereo camera can measure the distance to the imaged object using the parallax of the overlapping region of two images having different viewpoints captured by two cameras at a predetermined interval.

In the stereo camera, it is possible to accurately grasp the risk of collision to an object in front by measuring the distance using a plurality of cameras. In general, the distance is calculated by a method in which a plurality of cameras are connected to a calculation resource such as one system on the chip (SoC) to aggregate images, and a correspondence relationship between the images is derived while accessing the images to obtain the distance.

When the distance to the object is measured by the principle of the stereo camera, processing of deforming the objects on the two images so as to be arranged in the same line in the input image is referred to as parallelization processing. The parallelization processing needs to perform image distortion correction, image rotation/projection transformation, and the like. In this parallelization processing, it is necessary to determine the optical axis after the parallelization, and this may be taken in any manner in a range including the overlapping region as long as the axis is orthogonal to the base line connecting the positions of the two cameras. For example, Patent Literature 1 discloses a technique of setting an optical axis after parallelization to face a road surface side in a stereo camera facing forward.

Citation List

Patent Literature

PTL 1: JP 2019-16308 A

Summary of Invention

Technical Problem

Three-dimensional measurement based on the principle of a stereo camera can be performed not only in a camera group arranged in front but also in a stereo camera arranged in the periphery. In a stereo camera installed in the periphery, there is a high degree of freedom such as a combination of images with large distortion or an oblique base line, which affects detection performance and measurement accuracy depending on the setting of the optical axis, leading to deterioration of measurement performance.

The present invention has been made in view of the above problems, and an object thereof is to provide an in-vehicle image processing device capable of efficiently measuring a distance to an object.

Solution to Problem

In order to solve the above problem, an in-vehicle image processing device according to the present invention is an imaging device mounted on a vehicle, the imaging device including: an image acquisition unit that acquires images from a plurality of imaging devices that capture a plurality of images having different viewpoints; a parallelizing optical axis priority determination unit that determines priority for a plurality of optical axis candidates that are arbitrary optical axes on a plane orthogonal to a base line direction of the plurality of imaging devices; a parallelization processing unit that performs parallelization processing on the plurality of images by using at least one optical axis among the optical axis candidates for which the priority has been determined, and outputs the plurality of images; a parallax calculation unit that obtains parallax on the basis of the plurality of images output from the parallelization processing unit; and an object detection unit that detects an object on the basis of the parallax.

Advantageous Effects of Invention

According to the present invention, it is possible to efficiently measure the distance to the object.

The problems, configurations, and effects other than those described above will be clarified from the description of the embodiments below.

Brief Description of Drawings

[FIG. 1] FIG. 1 is a diagram for explaining a multi-camera system and a coordinate system according to an embodiment of the present invention.

[FIG. 2] FIG. 2 is a diagram for explaining a configuration of an in-vehicle image processing device according to an embodiment of the present invention.

[FIG. 3] FIG. 3 is a diagram for explaining a configuration of a detection range calculation unit.

[FIG. 4] FIG. 4 is a diagram for explaining a utilization example of a detection range calculation unit.

[FIG. 5] FIG. 5 is a diagram for explaining a configuration of a spatial resolution calculation unit.

[FIG. 6] FIG. 6 is a diagram for explaining a configuration of a measurement accuracy estimation unit.

[FIG. 7] FIG. 7 is a diagram for explaining a configuration of an in-vehicle image processing device according to an embodiment of the present invention having a vehicle operation state and a driving support function state.

[FIG. 8] FIG. 8 is a diagram for explaining a utilization example of a detection range calculation unit according to an operation mode.

[FIG. 9] FIG. 9 is a diagram for explaining a configuration of an in-vehicle image processing device according to an embodiment of the present invention in which a plurality of imaging devices are combined.

Description of Embodiments

Hereinafter, embodiments of the present invention will be described with reference to the accompanying drawings. In the drawings for describing the embodiments of the present invention, parts having the same functions are denoted by the same reference numerals, and repeated description thereof will be omitted.

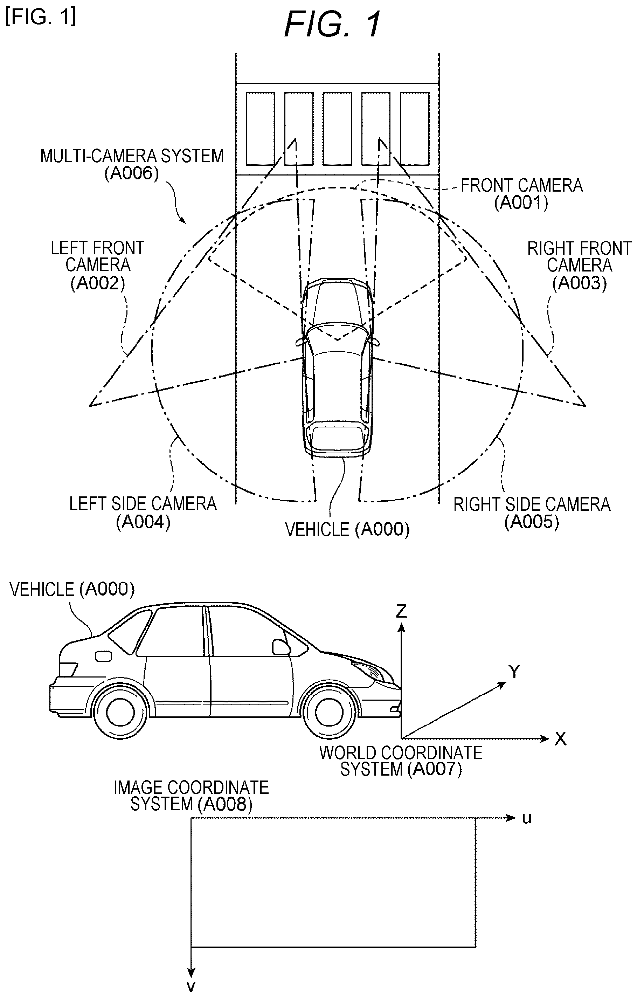

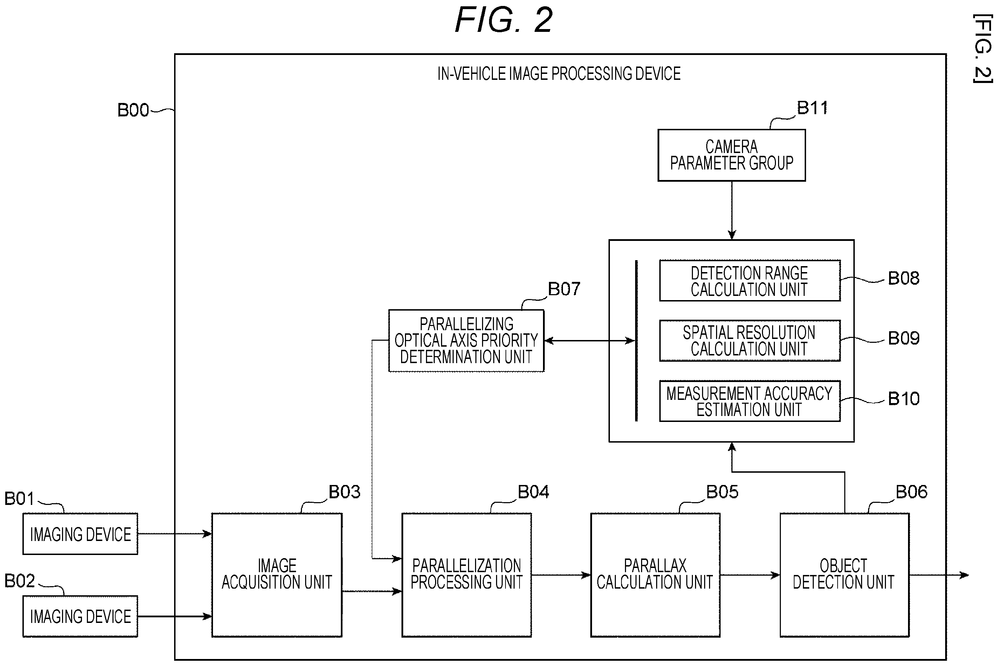

FIG. 1 illustrates a configuration of a multi-camera system A006 in which a front camera A001, a left front camera A002, a right front camera A003, a left side camera A004, and a right side camera A005 are attached to a front, a left front, a right front, a left side, and a right side of a vehicle A000, respectively. A multi-camera system A006 including these cameras estimates and acquires object information around a pedestrian, a vehicle, a white line, a road surface, and the like, and physical quantities such as a distance, a size, and a speed, and determines a control amount of the vehicle to implement automatic driving, driving support, and the like. An in-vehicle image processing device B00 (FIG. 2) for realizing the above processing is mounted on the vehicle A000. In the present embodiment, as indicated by A007, a vehicle coordinate system (world coordinate system) is taken, and a traveling direction of the vehicle A000 is an X axis, a horizontal direction is a Y axis, and a vertical direction is a Z axis. The image coordinate system is taken as A008.

There are several methods for estimating the distance to the object, but as a representative method, there is an example in which measurement is performed by the principle of triangulation when a plurality of cameras image the same object.

Here, when an arbitrary point in the world coordinates existing on the road is represented by $X=(X, Y, Z, 1)^T$ in the homogeneous coordinate system, external parameter matrices related to the rotation angle and the installation position of the camera are represented by R and T, respectively, the matrix is represented by $P=(R|T)$, an internal parameter matrix for managing the internal state such as the focal length and the optical center of the camera is represented by K, the image coordinates at which X is captured is represented by $u=(u, v, 1)^T$ in the homogeneous coordinate system, and the scale parameter is represented by s, and the projection model of the lens is represented by L, the following Formula 1 holds for each camera. Note that the subscript indicates the type of camera.

[Math. 1]

$$s_L u_L = K_L \mathcal{L}_L (P_L X)$$
$$s_R u_R = K_R \mathcal{L}_R (P_R X) \qquad \cdots \text{Formula 1}$$

The parallax measurement by the stereo processing can be performed by finding corresponding points of the two images, but it is possible to convert the images so that the same points are arranged in the same line on the image by performing processing called parallelization. The parallelization of the two cameras is realized by solving Formula 2 as follows.
[Math. 2]

$$T = T_R - T_L = (T_x \; T_y \; T_z)$$

$$r_1 = e_1 = \frac{T}{norm(T)}$$

$$r_2 = \frac{1}{\sqrt{T_x^2 + T_y^2}} T'$$

$$r_3 = r_2 \times r_1$$

$$R_{rect} = \begin{bmatrix} r_1 \\ r_3 \\ r_2 \end{bmatrix}$$

$$\cdots \text{Formula 2}$$

Here, there is a degree of freedom in how to take T', and basically any direction may be used as long as the direction is a vector orthogonal to a base line connecting two cameras. How to take T' is directly linked to how to generate an image after parallelization. Hereinafter, this is referred to as a parallelizing optical axis.

Depending on how to take the parallelizing optical axis, an image extremely changed from the ratio of the original resolution can be formed, but the calculation accuracy of parallax and the like may deteriorate. In addition, the presence or absence of observation as to whether or not the object to be detected can be observed may change.

Assuming that the image coordinate after parallelization is $u_{rect}$ and the projection system to the parallelized image is $L_{rect}$, the image coordinate can be expressed by the following relational formula 3.
[Math. 3]

$$s_L' u_L = K_L R_L \mathcal{L}_L \left( R_{rect}^{-1} \mathcal{L}_{rect_L}^{-1} \left( K_{rect_L}^{-1} u_{rect_L} \right) \right)$$

$$s_R' u_R = K_R R_R \mathcal{L}_R \left( R_{rect}^{-1} \mathcal{L}_{rect_R}^{-1} \left( K_{rect_R}^{-1} u_{rect_R} \right) \right)$$

$$\cdots \text{Formula 3}$$

FIG. 2 illustrates a configuration example of an in-vehicle image processing device according to the embodiment of the present invention. The in-vehicle image processing device B00 of the present embodiment includes an image acquisition unit B03, a parallelization processing unit B04, a parallax calculation unit B05, an object detection unit B06, and a parallelizing optical axis priority determination unit B07, and the parallelizing optical axis priority determination unit B07 determines the priority of the parallelizing optical axis on the basis of a detection range calculation unit B08, a spatial resolution calculation unit B09, a measurement accuracy estimation unit B10, and a camera parameter group B11 including camera parameters and image sizes and processing ranges shown in Formulas 1 to 3.

The image acquisition unit B03 acquires images from a plurality of imaging devices B01 and B02 that are mounted on the vehicle and capture a plurality of images having different viewpoints, and transmits the acquired images to the parallelization processing unit B04. As an example, the plurality of imaging devices B01 and B02 include a pair of cameras (imaging devices) that shares a part of the field of view or overlaps a part of the field of view (has an overlapping region) among the front camera A001, the left front camera A002, the right front camera A003, the left side camera A004, and the right side camera A005 illustrated in FIG. 1.

Based on the image information transmitted from the image acquisition unit B03, the parallelization processing unit B04 parallelizes the images obtained from the two imaging devices B01 and B02 based on the camera parameter group B11 updated in advance or during traveling and the optical axis selected by the parallelizing optical axis priority determination unit B07, and transmits the parallelized images to the parallax calculation unit B05 in the subsequent stage.

The parallax calculation unit B05 generates a parallax image on the basis of a method such as block matching, feature point matching, or deep learning on the basis of the plurality of images parallelized by the parallelization processing unit B04, and transmits the parallax image to the object detection unit B06 in the subsequent stage.

The object detection unit B06 detects an object by analyzing the parallax image generated by the parallax calculation unit B05.

The parallelizing optical axis priority determination unit B07 sets (determines) priority to the parallelizing optical axis (a plurality of optical axis candidates that are arbitrary optical axes on a plane orthogonal to the base line direction of the plurality of imaging devices B01 and B02) on the basis of the results of the detection range calculation unit B08, the spatial resolution calculation unit B09, and the measurement accuracy estimation unit B10, and selects, for example, a parallelizing optical axis having a high priority to transmit to the parallelization processing unit B04.

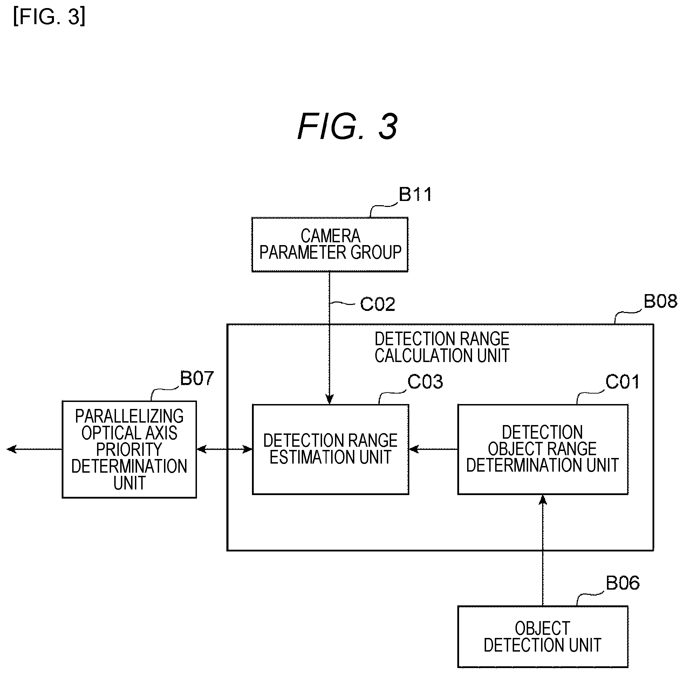

FIG. 3 illustrates a configuration example of the detection range calculation unit B08. The detection range calculation unit B08 includes a detection object range determination unit C01 that outputs an assumed position of an object, and a detection range estimation unit C03 that determines (estimates) whether or not the position of the object output by the detection object range determination unit C01 falls within the angle of view of the parallax image (object detection range), in particular, using information C02 on the size and range of the parallax image from the camera parameter group B11. The parallelizing optical axis priority determination unit B07 sets (determines) and selects a parallelizing optical axis suitable for satisfying the criterion as having a high priority. That is, the detection range calculation unit B08 obtains the object detection range occupied by the object to be detected in the image after the parallelization processing is performed using the plurality of optical axis candidates, and the parallelizing optical axis priority determination unit B07 determines the priority with respect to the parallelizing optical axis based on the object detection range. The parallelizing optical axis may be set from the parallelizing optical axis set in advance using the above criteria, or the optical axis satisfying the criteria may be selected analytically. The object to be detected and the range thereof used in the detection object range determination unit C01 are determined based on the result of the position and range of the object detected by the object detection unit B06 and the position and range of the object estimated in time series.

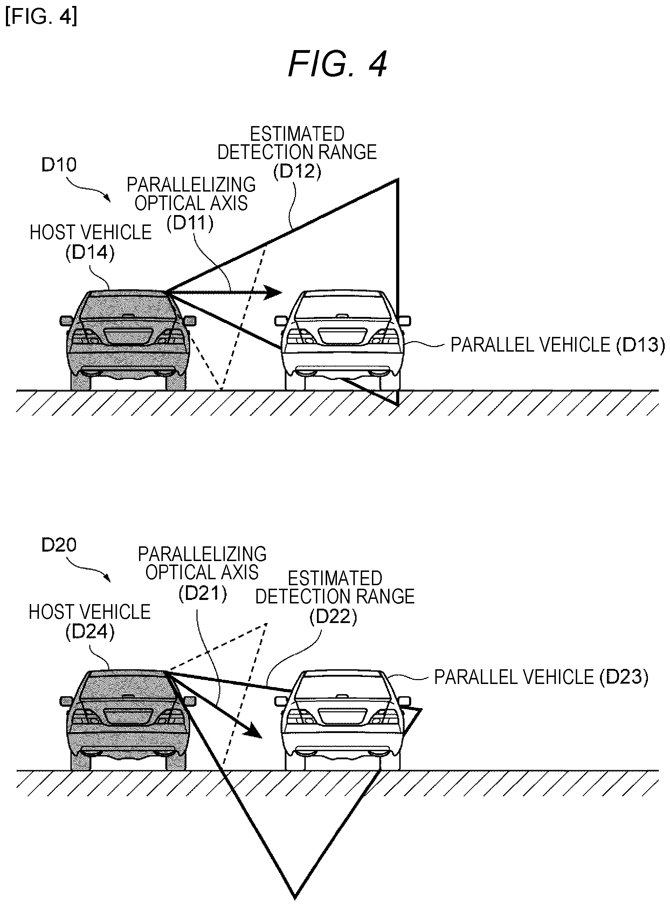

For example, FIG. 4 illustrates an example of a scene in which the vehicle runs in parallel with the host vehicle. In the scene of D10, when the parallelizing optical axis is defined as D11, the estimated detection range is defined as D12, and only the upper portion of the parallely traveling vehicle D13 traveling in parallel with the host vehicle D14 is detected. On the other hand, in the scene of D20, when the parallelizing optical axis is defined as D21, the estimated detection range is obtained as D22, and the lower portion of the parallely traveling vehicle D23 traveling in parallel with the host vehicle D24 is mainly detected. In accordance with each detection situation, for example, in a case where the optical axis is once oriented in a case such as D10, the optical axis may be changed as D20 in a case where it is desired to accurately measure the lower portion of the vehicle. Such a case is effective, for example, when it is desired to know an accurate distance to an approaching vehicle from the side. Specifically, in the case where the object detection unit B06 detects the parallely traveling vehicle D23, the detection object range determination unit C01 estimates the entire image from the partial appearance of the vehicle, and the detection range estimation unit C03 determines that the lower part of the vehicle is not visible, and sets (determines) and selects the parallelizing optical axis (having a wide object detection range) on which the lower part can be imaged as having a high priority. The parallelization processing unit B04, the parallax calculation unit B05, and the object detection unit B06 measure the distance by performing the parallelization processing according to the optical axis newly set as described above.

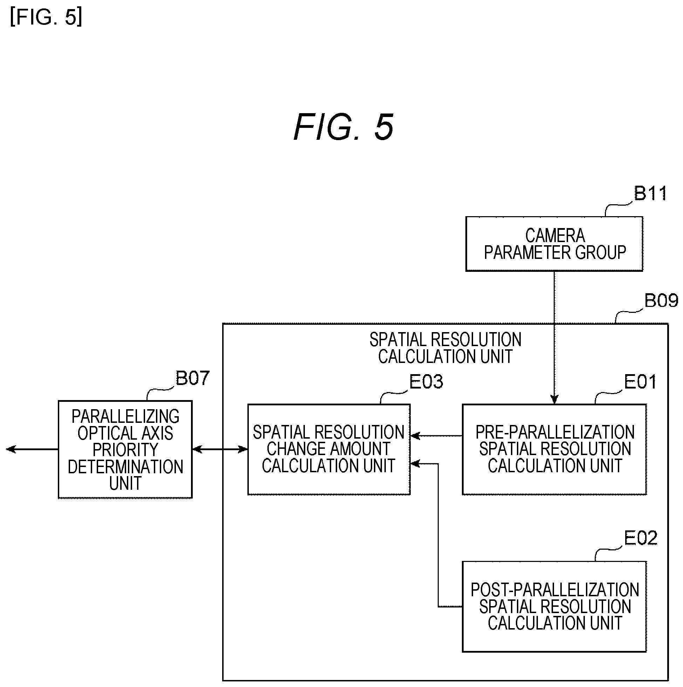

FIG. 5 illustrates a configuration example of the spatial resolution calculation unit B09. The spatial resolution calculation unit B09 includes a pre-parallelization spatial resolution calculation unit E01 that indicates the spatial resolution before the parallelization conversion, a post-parallelization spatial resolution calculation unit E02 that indicates the spatial resolution after the parallelization conversion, and a spatial resolution change amount calculation unit E03 that calculates a difference in the spatial resolution before and after the parallelization conversion, using the information of the camera parameter group B11, and the parallelizing optical axis priority determination unit B07 sets (determines) a suitable parallelizing optical axis as having a high priority according to the result of the spatial resolution change amount calculation unit E03. Alternatively, the parallelizing optical axis priority determination unit B07 may set the priority with respect to the parallelizing optical axis using the above information from the parallelizing optical axis set in advance. That is, the spatial resolution calculation unit B09 obtains the change in the spatial resolution between the image before the parallelization processing and the image after the parallelization processing is performed using the plurality of optical axis candidates, and the parallelizing optical axis priority determination unit B07 determines the priority for the parallelizing optical axis based on the change in the spatial resolution.

The pre-parallelization resolution is estimated from internal parameters such as a lens distortion model, a focal length, and an image size. Here, the pre-parallelization resolution may be simply returned in units of one pixel without specifying an incident angle or the like in particular. Furthermore, the magnitude of the incident angle per pixel may be considered. The size of the imaging surface imaged per pixel may also be calculated assuming the surface of the detection object using the external parameter of the camera.

The post-parallelization resolution is estimated from the projection model at the time of parallelization with the parallelizing optical axis, the focal length, the internal parameters after parallelization such as the size of the image, and the magnitude of the incident angle per pixel is considered similarly to the pre-parallelization resolution. Alternatively, the pixel amount for each incident angle, which is the reciprocal thereof, may be used as a reference. When the external parameter of the camera is used, the size of the imaging surface imaged per pixel may be calculated assuming the surface of the detection object.

The spatial resolution change amount calculation unit E03 is characterized by calculating the amount of change in spatial resolution before and after parallelization by any of the following methods.

For the pixel amount for each incident angle before and after the parallelization conversion, or the projection pixel amount per unit of the assumed plane of the detection object in a case where the plane can be assumed, a difference or a ratio thereof at the same incident angle is used for calculation of the change amount. More specifically, as the difference, it is conceivable to use an absolute value of the difference and an absolute value of a logarithm of the ratio as the amount of change in the ratio.

Based on the pixel after the parallelization conversion, the pixel amount before the parallelization conversion (or the logarithm thereof) allocated per pixel after the parallelization conversion may be used. Furthermore, since an incident angle corresponding to the pixel amount before the parallelization conversion calculated in this manner can be calculated, the information may be used. Furthermore, since the resolution of the incident angle per pixel originally imaged cannot be acquired after conversion, the incident angle may be corrected in a case where the pixel amount before conversion per pixel after conversion is less than 1. Furthermore, in a case where the image complement processing is entangled in the middle, or the like, the incident angle may be corrected accordingly.

After estimating the amount of conversion as described above, the parallelizing optical axis priority determination unit B07 sets the optical axis selection priority high for the optical axis having a small amount of change as a whole (small change), the optical axis having a small amount of change within the range when there is a special region of interest in the parallax image, and the optical axis having a small amount of change in the horizontal line of the parallax image as the parallax search direction. In a case where options of optical axes are prepared in advance, the above-described calculation result and priority are stored in advance, and a high priority is given to an appropriate optical axis according to the stored calculation result and priority.

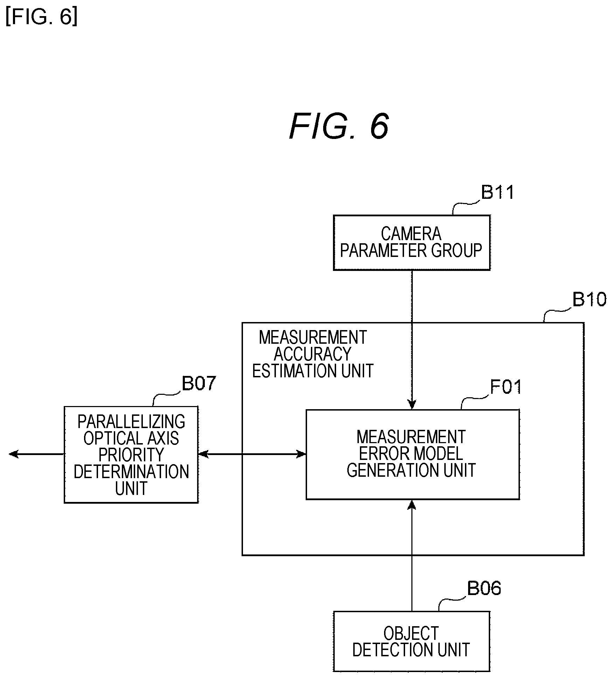

FIG. 6 illustrates a configuration example of the measurement accuracy estimation unit B10. The measurement accuracy estimation unit B10 includes a measurement error model generation unit F01 that generates a measurement error model representing a parallax measurement error based on the position and shape of the detection object output from the object detection unit B06, and the parallelizing optical axis priority determination unit B07 sets (determines) the priority of the parallelizing optical axis according to the result of the measurement error model generation unit F01. Alternatively, the parallelizing optical axis priority determination unit B07 may set the priority with respect to the parallelizing optical axis using the above information from the parallelizing optical axis set in advance. That is, the measurement accuracy estimation unit B10 estimates the measurement accuracy of the parallax when the parallax is obtained using the image after the parallelization processing is performed using the plurality of optical axis candidates, and the parallelizing optical axis priority determination unit B07 determines the priority with respect to the parallelizing optical axis based on the estimated measurement accuracy. Here, as the measurement error model, for example, when the situation as illustrated in FIG. 4 is assumed, it is conceivable to have a model determined according to the imaging object and the imaging direction in which since a situation is assumed in which the glass of the vehicle is imaged in the scene of D10 and erroneous measurement is likely to occur, there are many errors, and there are few errors in the imaging direction as in the scene of D20.

After the measurement accuracy is estimated as described above, the parallelizing optical axis priority determination unit B07 sets the optical axis selection priority high for the optical axis candidate considered to have high measurement accuracy and selects the optical axis candidate as the parallelizing optical axis.

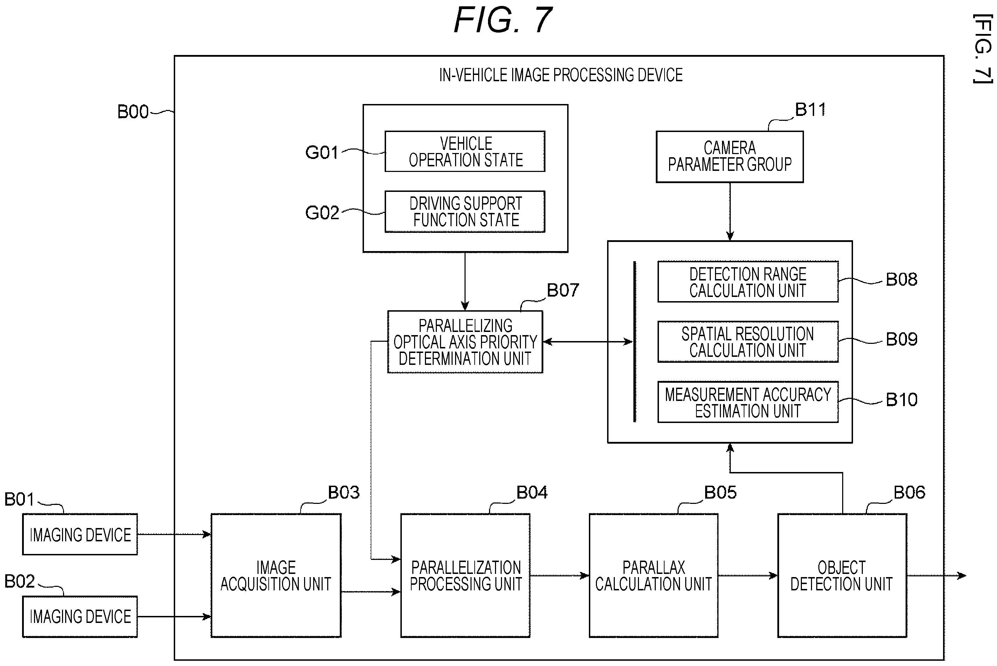

FIG. 7 illustrates a configuration example of the in-vehicle image processing device according to the embodiment of the present invention in which the priority of the parallelizing optical axis is determined according to the type of a vehicle operation state G01 or a driving support function state G02. Here, the vehicle operation state refers to a situation such as forward movement (high speed, medium speed, low speed), backward movement, right/left turn, or camera calibration such as aiming, and the driving support function manages a driving support function such as ACC or a lane keeping system, or a state in which calibration and adjustment of an imaging device such as calibration or aiming are working.

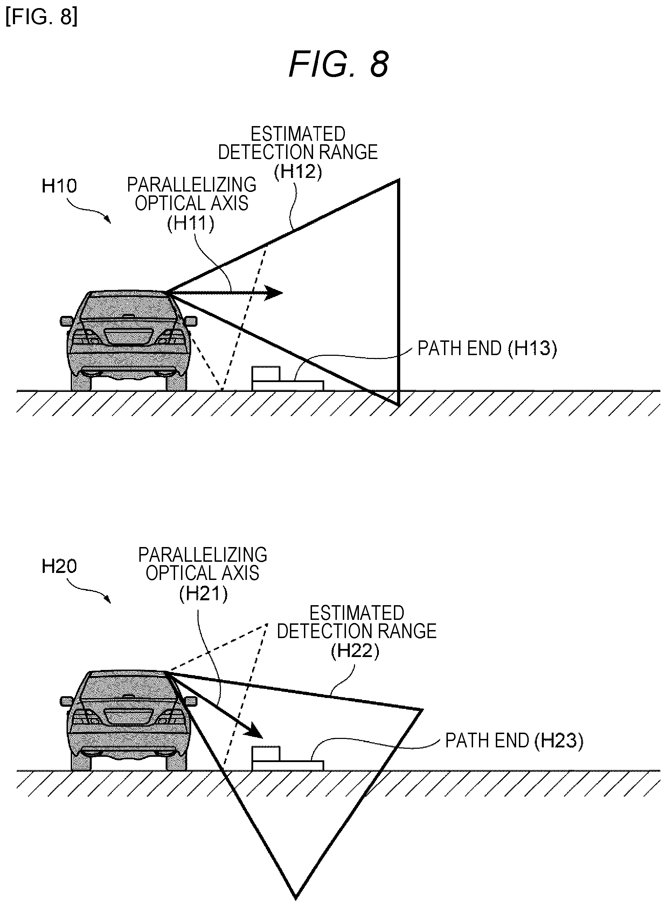

FIG. 8 illustrates an example of dividing the priority of the parallelizing optical axis (virtual optical axis) in the vehicle operation state and the driving support function state. In this example, when the vehicle operation state is high speed or medium speed, the virtual optical axis (H11) in which the parallelizing optical axis is close to horizontal with respect to the road surface is selected, and the three-dimensional object slightly far is easily observed (H12) (scene of H10). In other words, when the speed of the vehicle exceeds the predetermined value, the priority of the optical axis substantially parallel to the peripheral road surface of the vehicle is set to be high and selected from among the plurality of optical axis candidates. On the other hand, when it is necessary to travel while paying attention to the feet of the vehicle such as when the vehicle is operating at a low speed, backward, or when the vehicle moves to the road shoulder during parking or turning right or left, the virtual optical axis (H21) is selected such that the parallelizing optical axis approaches the road surface so that a place close to the tires or the body of the host vehicle is imaged (H22) (scene of H20). Here, a road edge (road shoulder) (H13, H23) is taken as an example. In other words, when the speed of the vehicle is lower than a predetermined value or when the driving support function of the vehicle executes parking assist, the priority of the optical axis toward the peripheral road surface of the vehicle is set to be high among the plurality of optical axis candidates and the optical axis is selected. In addition, as the distance of the approaching object to the host vehicle becomes shorter, the priority of the optical axis toward the peripheral road surface of the vehicle is set to be higher and the optical axis is selected.

Note that, even at a low speed, it is also possible to switch so as to make it easier to measure the three-dimensional object by selecting (in other words, when it is determined that the vehicle has entered the intersection, the priority of the optical axis substantially parallel to the peripheral road surface of the vehicle is set to be higher and the optical axis is selected from among the plurality of optical axis candidates) a virtual optical axis in which the parallelizing optical axis is close to horizontal with respect to the road surface at the time of entering the intersection.

As another example, for example, in a case where the driving support function is at the time of calibration and adjustment of the imaging device such as aiming and calibration, the parallelizing optical axis can be selected so as to be suitable for imaging calibration equipment as a target. In other words, in a case where the driving support function of the vehicle calibrates the imaging device, the priority of the optical axis suitable for imaging the calibration equipment of the imaging device is set to be higher and the optical axis is selected.

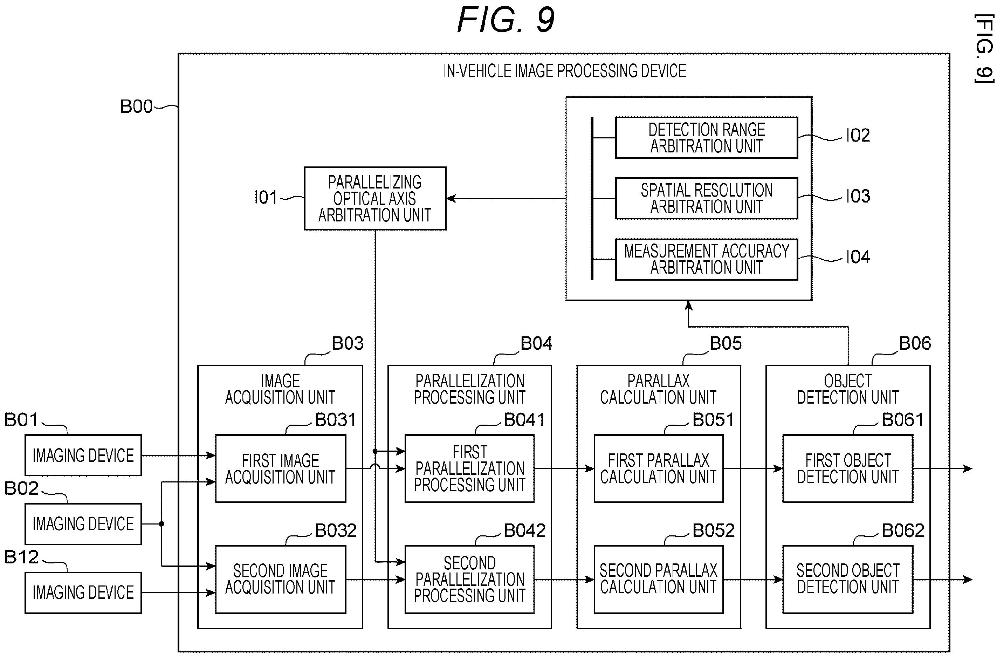

FIG. 9 illustrates a configuration example of an in-vehicle image processing device according to the embodiment of the present invention in which a plurality of imaging devices are combined. In this configuration, three or more imaging devices are provided, and a parallelization unit, a parallax calculation unit, and an object detection unit are provided for each pair of imaging devices. That is, in the in-vehicle image processing device B00, the image acquisition unit B03 includes a first image acquisition unit B031 that acquires images from the plurality of imaging devices B01 and B02, and a second image acquisition unit B032 that acquires images from the plurality of imaging devices B02 and B12, and the parallelization processing unit B04, the parallax calculation unit B05, and the object detection unit B06 respectively include a first parallelization processing unit B041, a first parallax calculation unit B051, and a first object detection unit B061 that process the images acquired by the first image acquisition unit B031, and a second parallelization processing unit B042, a second parallax calculation unit B052, and a second object detection unit B062 that process the images acquired by the second image acquisition unit B032. Further, the in-vehicle image processing device B00 includes a parallelizing optical axis arbitration unit I01, and the parallelizing optical axis arbitration unit I01 selects an optimum parallelizing optical axis by arbitrating the parallelizing optical axis (s) based on a detection range arbitration unit I02, a spatial resolution arbitration unit I03, and a measurement accuracy arbitration unit I04.

For the plurality of parallelizations, the parallelizing optical axis arbitration unit I01 arbitrates the entire optical axis to be optimal, and selects the parallelizing optical axis.

For example, if a part of the region cannot be seen as a result of selecting the parallelizing optical axis in which the pair of imaging device B01 and imaging device B02 exists, it is conceivable that the detection range arbitration unit I02 selects the parallelizing optical axis of the pair of imaging device B02 and imaging device B12 so as to compensate for the region. As a result, the region where the imaging device B01 and the imaging device B02 cannot be seen is covered by the imaging device B02 and the imaging device B12, and the detection range is complemented as a whole.

In addition, if the change in the spatial resolution becomes large for a part of the region, the spatial resolution arbitration unit I03 selects the parallelizing optical axis in which the change in the spatial resolution becomes as small as possible with respect to the region in which the change in the spatial resolution is assumed to be large. As a result, it is possible to realize a configuration that covers the entire system such that a change in the spatial resolution is small.

Similarly, the measurement accuracy arbitration unit I04 also accommodates and selects the parallelizing optical axis between the cameras so as to reduce the error estimated by the measurement error model.

The parallelizing optical axis arbitration unit I01 sets appropriate values for the optical axes of the plurality of cameras according to the priorities determined by the arbitration units I02, I03, and I04. In this example, three imaging devices are illustrated as an example, but the same can be applied to a configuration including four or more imaging devices.

As described above, the in-vehicle image processing device B00 of the present embodiment is (a plurality of) imaging devices mounted on a vehicle, and includes: the image acquisition unit B03 that acquires images from a plurality of imaging devices that capture a plurality of images having different viewpoints; the parallelizing optical axis priority determination unit B07 that determines priority for a plurality of optical axis candidates that are arbitrary optical axes on a plane orthogonal to a base line direction of the plurality of imaging devices; the parallelization processing unit B04 that performs parallelization processing on the plurality of images using at least one optical axis among the optical axis candidates for which the priority has been determined and outputs the images; the parallax calculation unit B05 that obtains parallax on the basis of the plurality of images output from the parallelization processing unit B04; and the object detection unit B06 that detects an object (in the image) on the basis of the parallax.

The in-vehicle image processing device B00 further includes the spatial resolution calculation unit B09 that obtains a change in spatial resolution between the image before the parallelization processing and the image after the parallelization processing is performed using the plurality of optical axis candidates, and the parallelizing optical axis priority determination unit B07 determines the priority on the basis of the change in the spatial resolution.

The in-vehicle image processing device B00 includes a detection range calculation unit B08 that obtains an object detection range occupied by an object to be detected in an image after the parallelization processing is performed using the plurality of optical axis candidates, and the parallelizing optical axis priority determination unit B07 determines the priority on the basis of the object detection range.

The in-vehicle image processing device B00 includes a measurement accuracy estimation unit B10 that estimates the measurement accuracy of the parallax when the parallax is obtained using the image after the parallelization processing is performed using the plurality of optical axis candidates, and the parallelizing optical axis priority determination unit B07 determines the priority on the basis of the estimated measurement accuracy.

The parallelizing optical axis priority determination unit B07 changes the priority on the basis of an operation state of the vehicle.

When the speed of the vehicle is lower than a predetermined value or when the driving support function of the vehicle executes parking assist, the parallelizing optical axis priority determination unit B07 sets the priority of the optical axis toward the peripheral road surface of the vehicle to be high among the plurality of optical axis candidates.

When the speed of the vehicle exceeds a predetermined value or when it is determined that the vehicle has entered the intersection, the parallelizing optical axis priority determination unit B07 sets the priority of the optical axis substantially parallel to the peripheral road surface of the vehicle to be high among the plurality of optical axis candidates.

In a case where the driving support function of the vehicle calibrates the imaging device, the parallelizing optical axis priority determination unit B07 sets the priority of the optical axis to be suitable for imaging calibration equipment of the imaging device to be high.

In other words, the parallelizing optical axis priority determination unit B07 determines the candidates for the direction of the optical axis for parallelizing each image on the basis of any one of the information of the detection range determination unit (detection range calculation unit B08) that determines whether or not the object of the detection object or a part of the object can be imaged, the spatial resolution calculation unit B09 that calculates the change amount of the spatial resolution before and after the parallelization, and the measurement accuracy estimation unit B10 that estimates the measurement accuracy of the measurement object.

The detection range determination unit (detection range calculation unit B08) estimates whether or not imaging can be performed for a predetermined detection object or a portion of the detection object according to a candidate of the parallelizing optical axis, and selects, as the parallelizing optical axis, a candidate considered to have the widest detection range on the basis of a result of the estimation.

The spatial resolution calculation unit B09 calculates the change in the spatial resolution before the parallelization conversion and after the parallelization conversion for each imaging device according to the candidate of the parallelizing optical axis, and selects, as the parallelization axis, a candidate in which the change in both imaging devices is regarded as small as a result of the spatial resolution calculation unit B09.

The measurement accuracy estimation unit B10 estimates a measurement efficiency and a measurement accuracy of a predetermined detection object according to a candidate of the parallelizing optical axis, and selects, as the parallelizing optical axis, a candidate that is considered to have the highest measurement accuracy as a result of the measurement accuracy estimation unit B10. The measurement accuracy estimation unit B10 estimates a surface of the detection object and selects the optical axis such that the optical axis is substantially orthogonal to the surface.

The parallelizing optical axis priority determination unit B07 changes the optical axis priority on the basis of an operation state of the vehicle and on/off of a driving support function.

The in-vehicle image processing device B00 selects the parallelizing optical axis such that an object closer to the host vehicle is imaged when the driving support function is at the time of parking assist or when the vehicle operation state is at the time of low-speed traveling.

The in-vehicle image processing device B00 selects an axis in which the parallelizing optical axis is substantially horizontal to the road surface when the vehicle operation state is at the time of high-speed traveling.

The in-vehicle image processing device B00 selects the parallelizing optical axis in the road surface direction as the distance of the approaching object to the host vehicle approaches.

When the driving support function determines that the vehicle has entered the intersection, the in-vehicle image processing device B00 selects the parallelizing optical axis such that the parallelizing optical axis is substantially horizontal to the road surface.

The in-vehicle image processing device B00 selects the parallelizing optical axis so as to be suitable for imaging calibration equipment of the imaging device when the driving support function performs calibration of the imaging device.

When the priorities of the parallelizing optical axes compete with each other, the parallelizing optical axis priority determination unit B07 selects a plurality of parallelizing optical axes and performs a plurality of parallax measurements.

When the parallelizing optical axes compete with each other, the parallelizing optical axis priority determination unit B07 evaluates a risk for each object, and selects a parallelizing optical axis on which the object can be best detected or measured based on the risk.

According to the present embodiment, it is possible to efficiently measure the distance to the object by appropriately setting the selection priority of the parallelizing optical axis according to various situations, selecting an appropriate parallelizing optical axis, and performing three-dimensional measurement by performing the parallelization processing.

Note that the present invention is not limited to the above-described embodiments, and includes various modifications. For example, the above-described embodiments have been described in detail for easy understanding of the present invention, and are not necessarily limited to those having all the described configurations. Further, a part of the configuration of one embodiment can be replaced with the configuration of another embodiment, and the configuration of another embodiment can be added to the configuration of one embodiment. In addition, it is possible to add, delete, and replace other configurations for a part of the configuration of each embodiment.

In addition, some or all of the above-described configurations, functions, processing units, processing means, and the like may be realized by hardware, for example, by designing with an integrated circuit. In addition, each of the above-described configurations, functions, and the like may be realized by software by a processor interpreting and executing a program for implementing each function. Information such as a program, a table, and a file for implementing each function can be placed in a memory, a hard disk, a storage device such as a solid state drive (SSD), or a recording medium such as an IC card, an SD card, or a DVD.

Further, control lines and information lines indicate what is considered to be necessary for the description, and not all control lines and information lines in the product are necessarily shown. In practice, almost all configurations may be considered to be mutually connected.

Reference Signs List

| | |
|---|---|
| B00 | in-vehicle image processing device |
| B01 | imaging device |
| B02 | imaging device |
| B03 | image acquisition unit |
| B04 | parallelization processing unit |
| B05 | parallax calculation unit |
| B06 | object detection unit |
| B07 | parallelizing optical axis priority determination unit |
| B08 | detection range calculation unit |
| B09 | spatial resolution calculation unit |
| B10 | measurement accuracy estimation unit |
| G01 | vehicle operation state |
| G02 | driving support function state |
| I01 | parallelizing optical axis arbitration unit |
| I02 | detection range arbitration unit |
| I03 | spatial resolution arbitration unit |
| I04 | measurement accuracy arbitration unit |

**Claims**

1. An in-vehicle image processing device which is an imaging device mounted on a vehicle, the imaging device comprising:

an image acquisition unit that acquires images from a plurality of imaging devices that capture a plurality of images having different viewpoints;

a parallelizing optical axis priority determination unit that determines priority for a plurality of optical axis candidates that are arbitrary optical axes on a plane orthogonal to a base line direction of the plurality of imaging devices;

a parallelization processing unit that performs parallelization processing on the plurality of images and outputs the images by using at least one optical axis among the optical axis candidates of which the priority is determined;

a parallax calculation unit that obtains parallax on a basis of the plurality of images output from the parallelization processing unit; and

an object detection unit that detects an object on a basis of the parallax.

2. The in-vehicle image processing device according to claim 1, further comprising

a spatial resolution calculation unit that obtains a change in spatial resolution between an image before the parallelization processing and an image after the parallelization processing is performed using the plurality of optical axis candidates, wherein

the parallelizing optical axis priority determination unit determines the priority based on a change in the spatial resolution.

3. The in-vehicle image processing device according to claim 1, further comprising

a detection range calculation unit that obtains an object detection range occupied by an object to be detected in an image after the parallelization processing is performed using the plurality of optical axis candidates, wherein the parallelizing optical axis priority determination unit determines the priority based on the object detection range.

4. The in-vehicle image processing device according to claim 1, further comprising

a measurement accuracy estimation unit that estimates measurement accuracy of the parallax in a case where the parallax is obtained using the image after the parallelization processing is performed using the plurality of optical axis candidates, wherein

the parallelizing optical axis priority determination unit determines the priority based on the estimated measurement accuracy.

5. The in-vehicle image processing device according to claim 1, wherein
the parallelizing optical axis priority determination unit changes the priority based on an operation state of the vehicle.

6. The in-vehicle image processing device according to claim 5, wherein
the parallelizing optical axis priority determination unit sets priority of an optical axis toward a peripheral road surface of the vehicle to be high among the plurality of optical axis candidates when the speed of the vehicle is lower than a predetermined value.

7. The in-vehicle image processing device according to claim 5, wherein
the parallelizing optical axis priority determination unit sets priority of an optical axis toward a peripheral road surface of the vehicle to be high among the plurality of optical axis candidates when a driving support function of the vehicle executes parking assist.

8. The in-vehicle image processing device according to claim 5, wherein
the parallelizing optical axis priority determination unit sets priority of an optical axis substantially parallel to a peripheral road surface of the vehicle to be high among the plurality of optical axis candidates when a speed of the vehicle exceeds a predetermined value.

9. The in-vehicle image processing device according to claim 5, wherein
the parallelizing optical axis priority determination unit sets priority of an optical axis substantially parallel to a peripheral road surface of the vehicle to be high among the plurality of optical axis candidates when it is determined that the vehicle has entered an intersection.

10. The in-vehicle image processing device according to claim 5, wherein
the parallelizing optical axis priority determination unit sets priority of an optical axis suitable for imaging calibration equipment of the imaging device to be high when a driving support function of the vehicle calibrates the imaging

device.

[FIG. 1]

# FIG. 1

MULTI-CAMERA SYSTEM
(A006)

FRONT CAMERA
(A001)

LEFT FRONT
CAMERA
(A002)

RIGHT FRONT
CAMERA
(A003)

LEFT SIDE CAMERA
(A004)

VEHICLE (A000)

RIGHT SIDE CAMERA
(A005)

VEHICLE (A000)

Z

Y

X

WORLD COORDINATE
SYSTEM (A007)

IMAGE COORDINATE
SYSTEM (A008)

u

v

EP 4 749 574 A1

# FIG. 2

IN-VEHICLE IMAGE PROCESSING DEVICE (B00)

- B11 CAMERA PARAMETER GROUP
- B08 DETECTION RANGE CALCULATION UNIT
- B09 SPATIAL RESOLUTION CALCULATION UNIT
- B10 MEASUREMENT ACCURACY ESTIMATION UNIT
- B07 PARALLELIZING OPTICAL AXIS PRIORITY DETERMINATION UNIT
- B01 IMAGING DEVICE
- B02 IMAGING DEVICE
- B03 IMAGE ACQUISITION UNIT
- B04 PARALLELIZATION PROCESSING UNIT
- B05 PARALLAX CALCULATION UNIT
- B06 OBJECT DETECTION UNIT

[FIG. 2]

14

[FIG. 3]

*FIG. 3*

B11

CAMERA
PARAMETER GROUP

C02

B08

DETECTION RANGE
CALCULATION UNIT

B07

PARALLELIZING
OPTICAL AXIS
PRIORITY
DETERMINATION
UNIT

C03

DETECTION RANGE
ESTIMATION UNIT

C01

DETECTION
OBJECT RANGE
DETERMINATION UNIT

B06

OBJECT
DETECTION UNIT

[FIG. 4]

## FIG. 4

ESTIMATED
DETECTION RANGE
(D12)

D10

PARALLELIZING
OPTICAL AXIS
(D11)

HOST VEHICLE
(D14)

PARALLEL VEHICLE (D13)

D20

PARALLELIZING
OPTICAL AXIS
(D21)

ESTIMATED
DETECTION RANGE
(D22)

HOST VEHICLE
(D24)

PARALLEL VEHICLE (D23)

[FIG. 5]

*FIG. 5*

[FIG. 6]

*FIG. 6*

*FIG. 7*

[FIG. 7]

EP 4 749 574 A1

19

IN-VEHICLE IMAGE PROCESSING DEVICE

B00

G01 — VEHICLE OPERATION STATE

G02 — DRIVING SUPPORT FUNCTION STATE

B11 — CAMERA PARAMETER GROUP

B07 — PARALLELIZING OPTICAL AXIS PRIORITY DETERMINATION UNIT

DETECTION RANGE CALCULATION UNIT — B08

SPATIAL RESOLUTION CALCULATION UNIT — B09

MEASUREMENT ACCURACY ESTIMATION UNIT — B10

B01 — IMAGING DEVICE

B02 — IMAGING DEVICE

B03 — IMAGE ACQUISITION UNIT

B04 — PARALLELIZATION PROCESSING UNIT

B05 — PARALLAX CALCULATION UNIT

B06 — OBJECT DETECTION UNIT

[FIG. 8]

# FIG. 8

ESTIMATED
DETECTION RANGE
(H12)

H10  PARALLELIZING
OPTICAL AXIS
(H11)

PATH END (H13)

H20  PARALLELIZING
OPTICAL AXIS
(H21)

ESTIMATED
DETECTION RANGE
(H22)

PATH END (H23)

*FIG. 9*

[FIG. 9]

EP 4 749 574 A1

**EP 4 749 574 A1**

## INTERNATIONAL SEARCH REPORT

| International application No. |
|---|
| **PCT/JP2024/024712** |

| | |
|---|---|
| **A.** | **CLASSIFICATION OF SUBJECT MATTER** |

*G06T 7/593*(2017.01)i; *B60R 11/02*(2006.01)i; *G01B 11/00*(2006.01)i; *G01C 3/06*(2006.01)i; *G06T 1/00*(2006.01)i
FI:  G06T7/593; B60R11/02 Z; G01B11/00 H; G01C3/06 110V; G06T1/00 330A

According to International Patent Classification (IPC) or to both national classification and IPC

| | |
|---|---|
| **B.** | **FIELDS SEARCHED** |

Minimum documentation searched (classification system followed by classification symbols)

G06T7/593; B60R11/02; G01B11/00; G01C3/06; G06T1/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | JP 2004-133556 A (NIPPON TELEGRAPH AND TELEPHONE CORPORATION) 30 April 2004 (2004-04-30)<br>entire text, all drawings | 1-10 |
| A | JP 2021-135596 A (HITACHI ASTEMO, LTD.) 13 September 2021 (2021-09-13)<br>entire text, all drawings | 1-10 |
| A | JP 2020-012735 A (HITACHI AUTOMOTIVE SYSTEMS, LTD.) 23 January 2020 (2020-01-23)<br>entire text, all drawings | 1-10 |
| A | JP 2019-016308 A (ZMP CO., LTD.) 31 January 2019 (2019-01-31)<br>entire text, all drawings | 1-10 |
| A | WO 2019/003910 A1 (SONY CORPORATION) 03 January 2019 (2019-01-03)<br>entire text, all drawings | 1-10 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 August 2024** | **20 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/024712**

| Patent document cited in search report | | | Publication date (day/month/year) | Patent family member(s) | | | Publication date (day/month/year) |
|---|---|---|---|---|---|---|---|
| JP | 2004-133556 | A | 30 April 2004 | (Family: none) | | | |
| JP | 2021-135596 | A | 13 September 2021 | US entire text, all drawings WO | 2023/0051270 2021/171776 | A1 A1 | |
| JP | 2020-012735 | A | 23 January 2020 | WO CN | 2020/017334 112424565 | A1 A | |
| JP | 2019-016308 | A | 31 January 2019 | (Family: none) | | | |
| WO | 2019/003910 | A1 | 03 January 2019 | US entire text, all drawings CN | 2020/0137379 110785789 | A1 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019016308 A